# NEW EUROPEAN PATENT SPECIFICATION

(11) **EP 1 101 936 B2**
(45) Date of publication and mention of the opposition decision: **23.01.2013**
(45) Mention of the grant of the patent: 23.06.2004
(21) Application number: 00125115.6
(22) Date of filing: 17.11.2000
(51) Int. Cl.: F03D 11/04, F03D 1/06, F03D 1/00

(54) **Method for mounting main components in a nacelle of a windturbine**
Methode zum Montieren der Komponenten einer Windkraftanlage
Méthode d'assemblage des composants d'une éolienne

(30) Priority: 17.11.1999 DK 165499
(43) Date of publication of application: 23.05.2001
(73) Proprietor: Siemens Aktiengesellschaft, 80333 München (DE)
(72) Inventor: Nickelsen, Peter, 7480 Vildbjerg (DK)

(56) References cited:
- WO-A-96/10130
- WO-A-97/21621
- "Cutaway model AN BONUS 2 MW" AN WINDENERGIE GMBH WEBSITE, [Online] XP002182264 Retrieved from the Internet: <URL:http://www.anwind.de/2MWae.htm> [retrieved on 2001-11-07] & "References 2 MW" AN WINDENERGIE GMBH WEBSITE, [Online] Retrieved from the Internet: <URL:http://www.anwind.de/2%20MWe.htm> [retrieved on 2001-11-07]
- J.R.C.ARMSTRONG ET AL.: 'Technology develpment for, and preformance of, the WEG 25m turbine' WIND ENERGY CONVERSION 1985. FRONT PAGE pages 279 - 283 & EP 1 101 934 A2 (WEITKAMP, ROLAND) 18 November 1999
- P.B.SIMPSON ET AL.: 'The 3MW Orkney Wind Turbine.' WIND ENERGY CONVERSION 1983. FRONT PAGE pages 253 - 273
- P.B. SIMPSON ET AL.: 'Construction of the LS1, 3MW Wind Turbine' EUROPEAN WIND ENERGY ASSOCIATION, CONFERENCE AND EXHIBITION 1986. FRONT PAGE. EWEC 1986, pages 581 - 590
- P.B.SIMPSON ET AL.: 'Component system testing and installation of the LS1, 3MW wind turbine on Orkney' WINF ENERGY CONVERSION 1987. FRONT PAGE pages 323 - 332
- DEFU: 'Teknisk beskrivelse af Nibe møllerne.' RAPPORT NR : EEV 81-02, 1981, FRONT PAGE pages 93 - 103
- STAFFAN ENGSTRÖM ET AL.: 'Evaluation of the Nordic 1000 prototype' EWEC, 1997, FRONT PAGE pages 213 - 216
- T.K.PEDERSEN: 'Offshore wind power - the operational aspects.' BWEA, 2-4 SEPTEMBER 1998. FRONT PAGE pages 277 - 283
- NORDTANK ENERGY GROUP: 'Report - Tecnical Description of the NKT1500/60-60, vers.B' 22 October 1997, pages 19 - 21
- KIM DYRE ET AL.: 'Vindeby Off-Shore wind farm - the first experiences' EWEA 1992, FRONT PAGE 08 November 1992 - 11 November 1992, DENMARK, pages B7 - B7-10
- A.L.BURTON.: 'Report on the Offshore Wind Energy Assessment, Phase IIB Study' EXECUTIVE SUMMERY,1985, FRONT PAGE, AND FIGS 3-4 vol. 1, pages 14 - 17

## Description

The present invention concerns a method for mounting main components in or at a windmill, wherein initially a windmill tower is raised, wherein a nacelle is subsequently mounted on a supporting surface at the top of the windmill tower, and wherein finally the main components generator, gearbox and wings are mounted in or at the nacelle, whereby said nacelle is provided with side members for fastening said main components to said nacelle and with an opening through which said main components are introduced into or at the nacelle, and whereby said main components are mounted from below from an underside of said nacelle and upwards in or at the nacelle by means of a winch or a tackle fitted at the upper side of said nacelle. Furthermore the invention concerns a windmill nacelle for mounting the main components generator gearbox and wings, said nacelle being provided with side members for fastening said main components to said nacelle and with an opening through which said main components are introduced into or at said nacelle.

The nacelle on windmills of conventional type is normally made with a welded or cast machine frame onto which the transmission and yawing system are fitted. The machine frame may be designed in different ways so that greater or lesser parts of it form a part of the construction that is to absorb the loads from the rotor. In certain constructions, the machine frame mainly consists of steel sections where the front part supports the transmission system and forms the transition to the yawing system, whereas the rear part is cantilevered without any direct support on the yawing system and which by itself carries heavy main components, especially the generator. The covering of the nacelle may, for example, be constituted by a glass fibre shell integrated with steel framework carried by the steel sections of the machine frame. In other constructions, the machine frame itself constitutes the lower part of the nacelle covering so that the further covering needed is limited to the upper part of the nacelle.

In other constructions, the machine frame is limited to a bearing part between yawing system and transmission system. Here, the other heavy main components, e.g. the generator, are carried by the nacelle covering which in this case must have sufficient strength and rigidity for ensuring a functioning suspension of the main components.

Several of the main components of the windmill are fitted in the nacelle; typically shaft/bearing arrangement, gear, generator and transformer etc.

When mounting shaft/bearing arrangement and the other main components, a method of mounting the main components on the machine frame from above is normally used. This direction of mounting is natural in the usual production process at the assembling factory, where first the bearing main components in the shape of machine frame and possibly nacelle covering are made ready, and where the main components in the mill are hoisted down on the bearing construction from above with a crane afterwards. The bearing construction is then provided with contact surfaces on the upper side of which the main components may rest when the main components have been hoisted down in place in the nacelle so that the main components unhurriedly may be fastened to the side members by means of screw bolts or in other ways while the main components are resting on the contact surfaces of the side members due to gravitational force.

A special version of this method of mounting is sometimes used by erecting very large windmills where it may be inconvenient or impossible to lift an assembled mill top upon the tower. In such a field mounting, the method may be used that in the first place the machine frame and possible further necessary main components of the nacelle, typically shaft/bearing arrangement, are lifted upon the tower only. Then the other main components of the mill may be fitted in the machine with a crane.

The crane, which typically is the same as used for raising the windmill tower, hoists the main components from the ground and up to the required height over the nacelle, swings the main components in over the nacelle, and from there lowers the main components down on the contact surfaces of the side members. In a typical sequence where shaft/bearing arrangement is mounted together with the machine frame, gear, generator, transformer and nacelle top may be mounted piece by piece in this way.

This prior art method for mounting the main components in the windmill is connected with several drawbacks.

By field mounting of large mills on high towers, a crane with great lifting height is to be used for the whole process. Though certain main components may have much less dead load than the tower and the machine frame, normally it would be rational to use the same large crane that may lift the greatest of the loads of tower and machine frame also for lifting even the smaller main components. The requirement of a great lifting height also contributes to make the supply small and the prices high, and therefore it would not be rational to bring in a further crane for lifting the lesser loads. The prior art method for field mounting is therefore connected with the weakness that some hours are used on a large and costly crane.

It might be a more significant disadvantage by the prior art method for mounting the main components, whether it is practised in an assembling factory or during field mounting, that by possible replacement the main components in the windmill are to be lifted up from their position on the machine frame before they may be lowered down to the ground surface. In many cases, the main components are to be lifted up over an upper rim of the covering, typically several meters above the contact surfaces on the machine frame. When extra height is calculated with for the main component itself and for straps, hook, etc., the required crane height typically becomes 5-10 m higher than the height of the windmill hub. Therefore a crane with great lifting height is required also by replacement works. Even though this requirement may be combined with a requirement of large capacity measured in load in the case of the large main components, by the lesser main components it may occur that the lifting height by itself necessitates use of a large crane with the associated drawbacks in the form of small supply and high prices.

By large windmills installed at sea, the floating crane required for installing mill tower and mill top will normally be of such size that the whole mill top may be mounted in one lift. Thus there is not much relevance in field mounting of main components. In return, the problem with replacing main components is substantially worsened compared with installation on land. In order to ensure sufficient stability at positioning and mounting or dismounting in the mill top, even by main components of moderate weight it may be necessary to make use of even very large floating cranes. The problem may be solved in a different way by using stable platforms, e.g. with barges of the jack-up type, but in return such barges usually have very small lifting capacity. All in all, the expense for replacing main components on windmills installed at sea may easily be of a size far exceeding the expense for the main components themselves.

Windmill constructions are known where a crane is built in. Such a built-in crane will normally have a lifting capacity of a least an order of magnitude less than the lifting capacity required for lifting in connection with replacing the largest main components. The reason for such a crane normally not being dimensioned for lifting large main components is the very considerable moment required if the crane is in the form of a swinging crane, e.g. of same kind as a typical lorry crane. Such construction is known from WO 96/10130. An embodiment as swinging crane will normally be preferred as it enables lifting the part to be replaced up and out over the upper rim of the nacelle, wherefrom it may be lowered to the ground with a winch. Even by a favourable mounting position in the middle of the main components, a typical dimensioning moment for the crane for a 2 MW windmill will be of the magnitude 1000 kNm corresponding to a lift of 15 t with an arm of 6-7 m. A moment of this size substantially exceeds what normally may be mounted on a lorry, so that it is not possible to take advantage of a standard crane for the windmill. Of course it is possible to make a custom built crane with the necessary lifting capacity which may be installed in a mill top but the expenses for the crane would be very significant compared with the other expenses for the windmill. The swinging crane according to WO 96/10130 is mounted at the nacelle, however it is arranged to swing outside the nacelle and have a substantial height if it should be able to swing large parts into the nacelle or onto the frame thereof.

A further windmill construction is known from SE 428 042.

It is the purpose of the present invention to indicate a method and a windmill nacelle relieving the said disadvantages so that installation and replacement of main components may take place without use of or with reduced requirements for external cranes.

This is achieved according to the present invention with a method according to claim 1 and a windmill nacelle according to claim 2.

The nacelle according to the invention is mentioned by introduction and further includes that said nacelle is provided with a lifting arrangement in form of a winch or tackle which is displaced in said nacelle, and that the side members are provided with contact surfaces at their underside forming abutment for corresponding connecting means on said main components for retaining said main components at said side members.

With the present invention there is thus provided a windmill nacelle and a method for mounting/installing main components in or at a windmill which enables field mounting with reduced use of crane and which enables replacement of even the largest main components totally without any use of crane.

With the invention there is thus provided some kind of lifting arrangement as the nacelle is provided with at least one winch (or tackle if the winch stands on the ground) which is arranged so that it may be disposed at such positions that each component may be placed at the right spot in or at the nacelle. This is made possible as the nacelle is arranged to receive the components from below. The contact surfaces are provided at the underside of the side members. These side members may be provided in the bottom of the nacelle which is provided with an opening for introducing the main components. This opening is preferably in the bottom of the nacelle but may be in an end or side wall as components may then be hoisted up and introduced by means of a projecting arm supporting the winch/tackle, and which may be displaced or swung into the nacelle with the main components in the elevated position.

By mounting the main components from below and up into the nacelle by field mounting, and not as previously done, i.e. from above and down into the nacelle, the height required for a crane to be able to mount the windmill will only be determined by erecting the mill tower and machine frame. This will normally be a lower height than the one required by mounting the subsequent main components in the nacelle in the usual way during field mounting.

When the machine frame is mounted at first, the subsequent main components may be mounted without further use of the crane whereby this is released for other tasks. For this is only required a winch with the needed lifting ability, either mounted in the mill top or mounted on the ground and with the necessary wire or chain connection for a tackle arrangement in the mill top. In the mill top no built-in swinging crane is required for performing a mounting as described. Everything needed is a point of attack for winch or tackle.

Provided that the main components are mounted from below and up into the nacelle, either directly or by mounting them as always otherwise done, namely from above and down into the nacelle, but on elements of the machine frame which by themselves are mounted from below and up into the nacelle, by replacing the main components in the field there may be used the method that the main components are lowered through the bottom of the nacelle and vertically or approximately vertically down to the ground. For this is only required a winch with the necessary lifting ability as by field mounting as described above, either mounted in the mill top or mounted on the ground and with the necessary wire or chain connection to a tackle arrangement in the mill top. Replacement of main components may thus occur without the use of a crane. No built-in swinging crane is required in the mill top for performing a lowering as described. All what is needed is a point of attack for a winch or a tackle.

In order to make the described method feasible, the nacelle has to be arranged in such a way that the main component may be mounted from below and up on the machine frame. This may, as mentioned above, occur directly or by mounting the main components from above and down into the nacelle but on elements of the machine frame which by themselves are mounted from below and up into the nacelle.

In a nacelle according to the invention, the main components are thus retained in upward direction at the underside of the side members. This enables mounting of the main components from below instead of from above in a simple way.

By the new way of mounting main components it is also necessary to change the side members so that the main components still may be fastened to the nacelle. Therefore, it is necessary to think unconventionally and to make the side members in such a way that the new way of mounting main components becomes possible to implement. By the side members being provided with flanges extending outwards in relation to the side members it is possible to provide the flanges with undersides, where an upper side on corresponding flanges on the main components may be retained against and fastened to the undersides.

In a preferred embodiment of the nacelle according to the invention, the nacelle is characterised by the side members forming support for a trolley with winch, and that one or more of the main components are intended to be hoisted from below and up into the nacelle by wires or the like being led to the winch, that the main components are fastened at one end of the ropes or wires, and by pulling in the other end of the ropes or wires.

By fitting a trolley with winch in the nacelle it becomes possible by means of wires or the like to hoist the main components up into the nacelle after the nacelle has been mounted at the top of the windmill tower. By driving mechanisms situated on land or on a floating barge it may then be possible to hoist the main components up in the desired height independently of the real height of the windmill tower.

In a second preferred embodiment, the machine frame of the nacelle is constituted by a construction with at least an upper horizontal or approximately horizontal beam and at least one lower horizontal or approximately horizontal beam, which are mutually connected with means for absorbing shearing forces, for example a lattice work. In this preferred embodiment an upper beam may constitute a track for a trolley while the main components may be attached to a lower beam. Hereby, the particular advantages that the nacelle and the machine frame at the same time can be made with particularly large rigidity are achieved simultaneously with the tracks of the trolley being made without any influence of the main components of the machine frame which must be arranged for mounting the main components.

The invention will then be described in more detail with reference to the accompanying schematic drawing, where:
- Fig. 1: shows a partial view, partly in section, of a prior art windmill nacelle,
- Fig. 2: shows a partial view of a windmill nacelle according to the invention,
- Fig. 3: illustrates steps by a method according to the invention,
- Fig. 4: a view corresponding to Fig. 2 for illustrating the nacelle during the mounting steps according to Fig. 3,
- Fig. 5: shows perspective view of the nacelle during a second step of the method according to the invention,
- Fig. 6: an illustration corresponding to Fig. 3 but for illustrating other steps of the method,
- Fig. 7: a view corresponding to Fig. 4 of the nacelle during the mounting steps shown in Fig. 6, and
- Fig. 8: a perspective view of the nacelle during the mounting steps shown in Fig. 6.

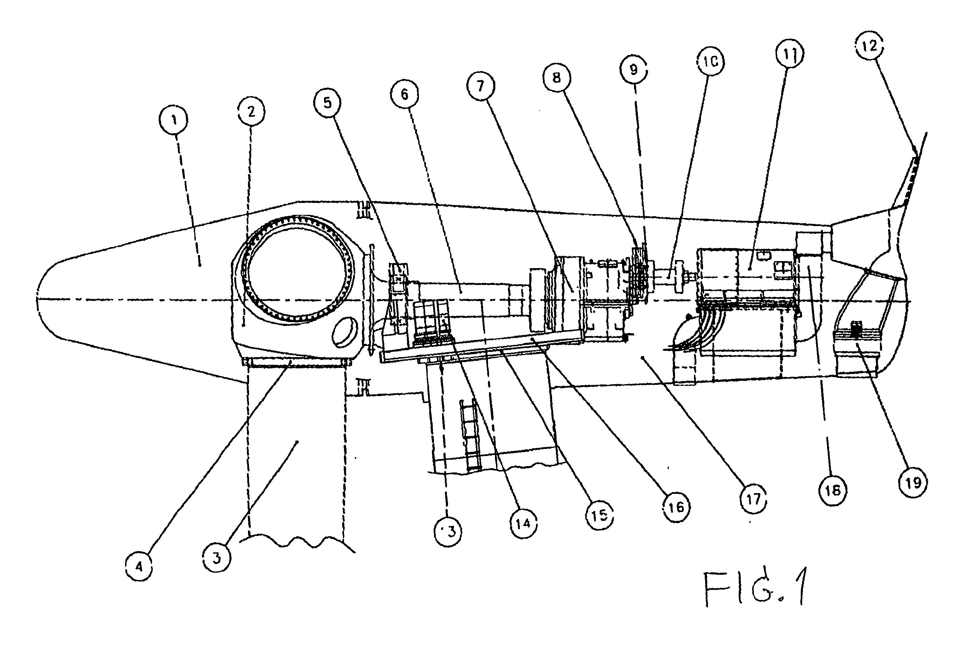

Figure 1 shows a windmill with a normal arrangement of the nacelle. The spinner 1 is fitted on the mill hub 2 which also carries the wing 3 that may be turned on the bearing 4. The main bearing 5 supports the main shaft 6 at the front, and at the rear the shaft is supported by the gear 7 which is fastened to the shaft with a crimp connection. The mechanical brake 8 is disposed on the fast shaft of the gear also carrying a coupling element 9 which by an intermediate piece 10 forms the connection to the generator 11. At the rear of the nacelle there are mounted meteorological instruments at the top 12 of the discharge system. The yawing bearing 13 carries the nacelle yawed by a number of yawing gears 14 the drives of which engage the toothed rim 15 of the yawing bearing. The bearing plate 16 supports the main bearing at the front and the gear at the rear and also carries the covering 17 supporting the generator. A heat exchanger 18 for the generator and an oil cooler 19 for the gear provide cooling for the most important main components. As the nacelle is upwardly closed, replacement of the main components requires that these are lifted up over the top rim of the nacelle.

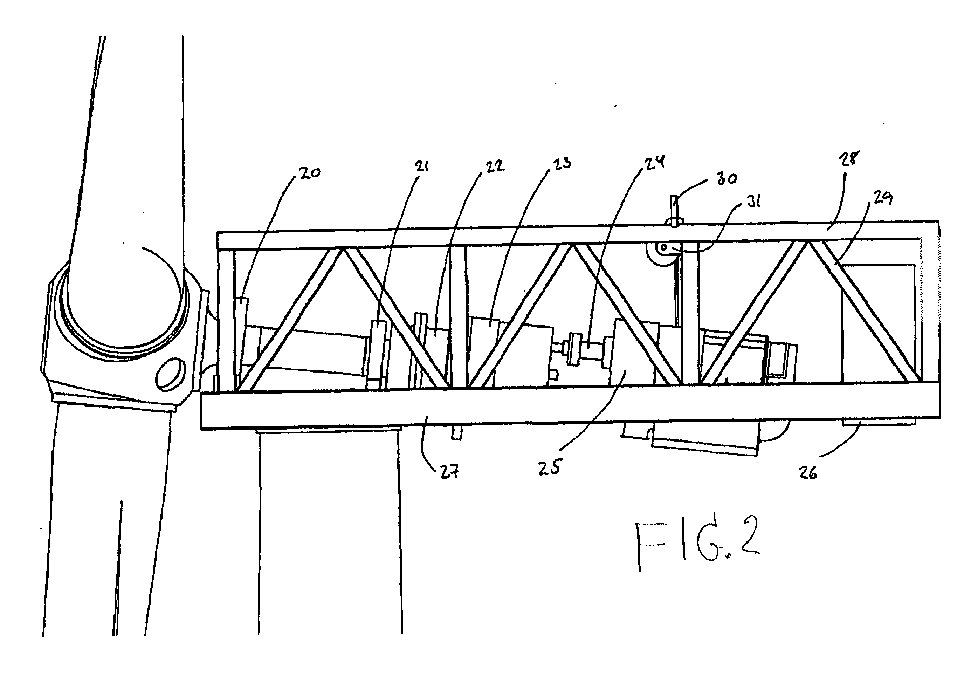

Figure 2 shows a complete nacelle according to the invention. The nacelle is shown without any covering. A front main bearing 20 corresponds to the main bearing 5 in the normal embodiment. A rear main bearing 21 supports the rear part of the main shaft. A flange coupling 22 provides connection between the main shaft and the gear 23 which may easily be loosened by dismounting. In a conventional way, a fast-running coupling 24 forms connection between the gear and the generator 25. At the rear of the nacelle there is disposed a transformer 26. The machine frame itself consists of a set of lower side members 27 and a set of upper side members 28 connected with a lattice work 29. On the upper side members there is provided a trolley 30 carrying a winch 31.

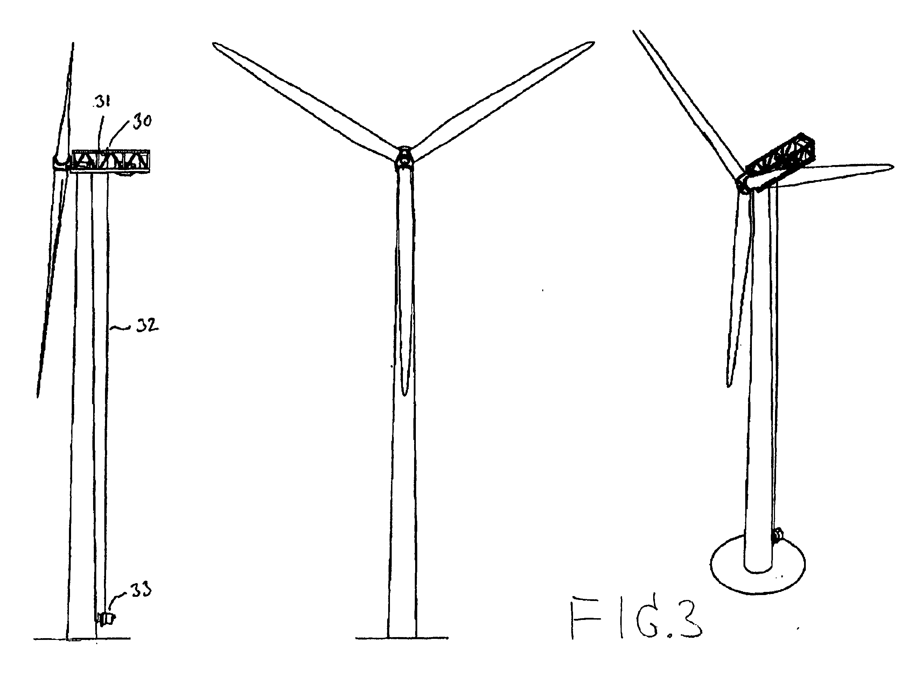

Figure 3 shows the method by partly mounting main components in the field. The trolley 30 is here positioned over the place of the gear in the nacelle, and the gear 33 is hoisted in place with the winch 31 and a long wire 32.

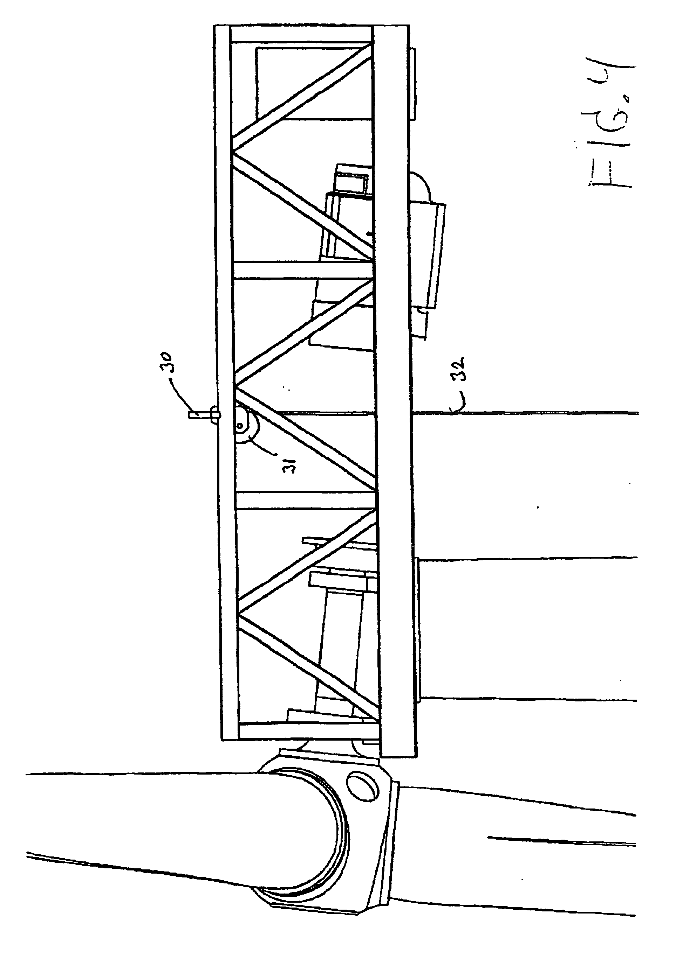

Figure 4 shows a close-up of a nacelle during the process shown in Figure 3. The trolley 30, the winch 31 and the wire 32 have the functions described above.

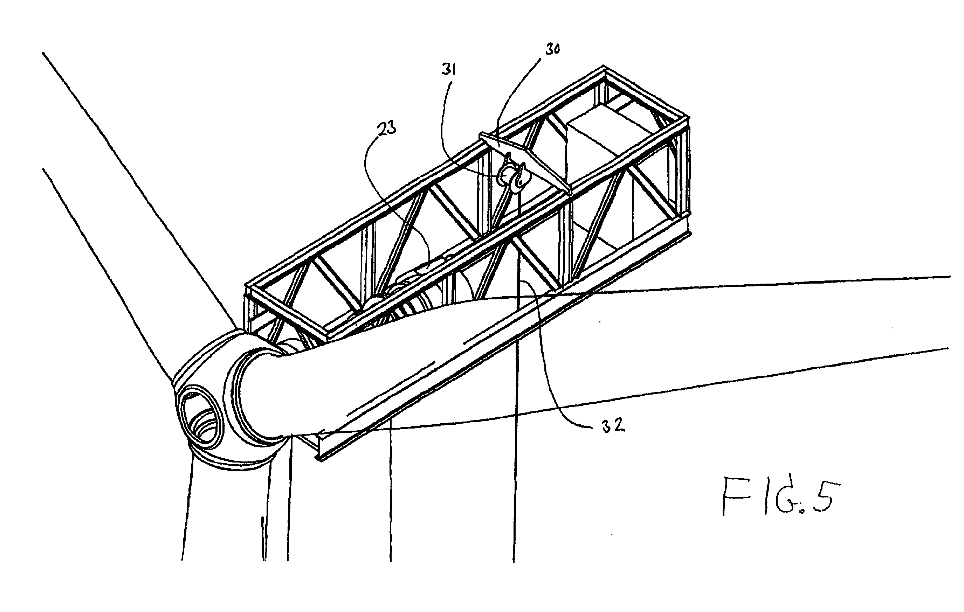

Figure 5 shows a perspective illustration of the nacelle during mounting or dismounting of the generator. The trolley 30 is here disposed over the place of the generator, and the generator is under hoisting with the winch 31 and the wire 32. The gear 32 is here at its normal place.

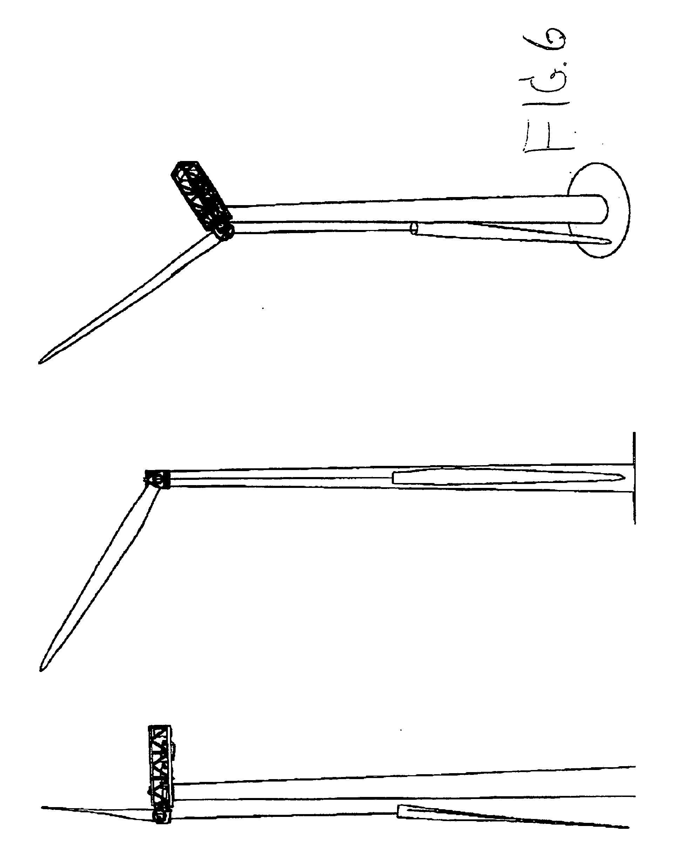

Figure 6 shows the use of the nacelle equipment by piece by piece mounting or replacement of wings.

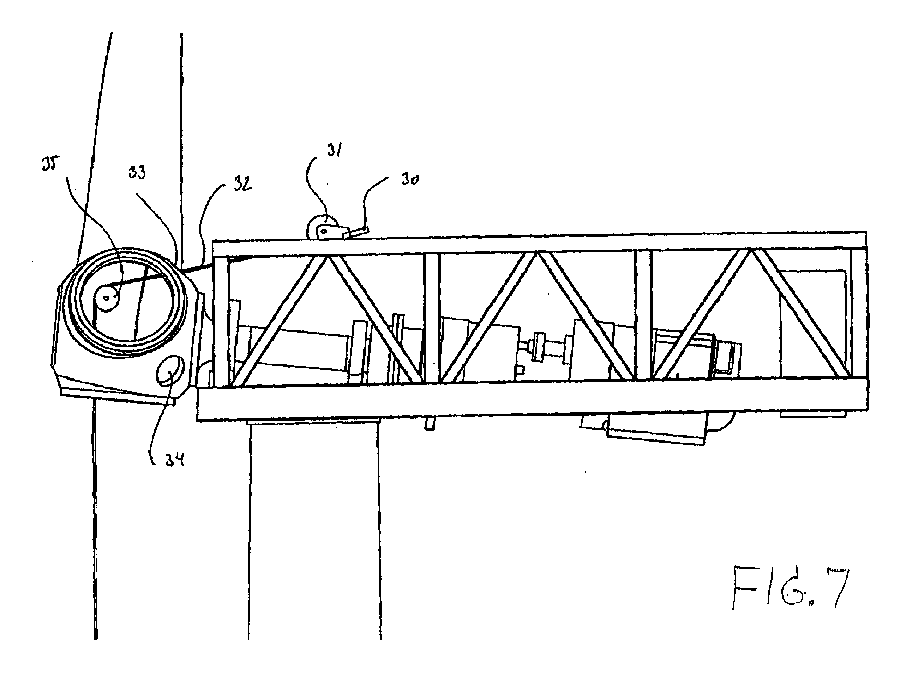

Figure 7 shows the arrangement in the nacelle during the process shown in Figure 6. The trolley 30 is here mounted relatively far ahead, and the wire 32 is drawn through the manhole 33 by the winch 31. A corresponding manhole 34 at the other wing is seen a little more clearly. The wire runs around the tackle 35 in the hub and may hoist the wing there from.

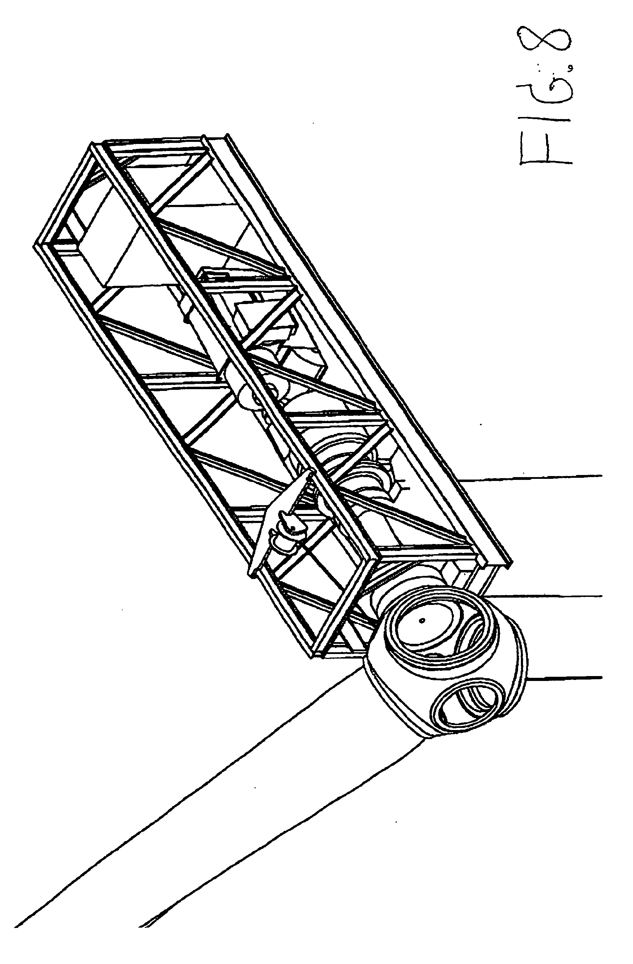

Figure 8 shows a perspective view of the nacelle during the process shown in Figure 7.

## Claims

1. A method for mounting main components in or at a windmill,
wherein initially a windmill tower is raised,
wherein a nacelle is subsequently mounted on a supporting surface (13) at the top of the windmill tower,
and wherein finally the main components generator (11 ,25), gearbox (7,23) and wings (3) are mounted in or at the nacelle,
whereby said nacelle is provided with side members (27) for fastening said main components to said nacelle
and with an opening through which said main components are introduced into or at the nacelle,
and whereby said main components are mounted from below from an underside of said nacelle and upwards in or at the nacelle by means of a winch (31) or a tackle
fitted at the upper side of said nacelle and whereby
said winch (31) or tackle is displaced in said nacelle, **characterised in that** the side members (27) are provided with contact surfaces at their underside forming abutment for corresponding connecting means on said main components for retaining said main components at said side members (27), wherin
said main components are fastened to the underside of said side members (27) at the bottom of the nacelle.

2. A windmill nacelle for mounting the main components generator (11 ,25), gearbox (7,23) and wings (3),
said nacelle being provided with side members (27) for fastening said main components to said nacelle
and with an opening through which said main components are introduced into or at said nacelle and whereby
said nacelle is provided with a lifting arrangement in form of a winch (31) or tackle which is displaced in said nacelle, **characterised in that** the side members (27) are provided with contact surfaces at their underside forming abutment for corresponding connecting means on said main components for retaining said main components at said side members (27), wherein said main compounds are fastened to the underside of said side members (27) at the bottom of the nacelle.

3. A windmill nacelle according to claim 2, **characterised in that** said contact surfaces comprise connecting means.

4. A windmill nacelle according to claim 3, **characterised in that** the connecting means of the side members (27) comprise flanges extending laterally, that
the connecting means of the main components are corresponding flanges extending laterally from the main components, and that a top side of the flanges on the main components is intended for abutting on a underside of the flanges of the side members.

5. A windmill nacelle according to claim 3, **characterized in that** the connecting means of the side members (27) comprise flanges extending laterally, that
the main components are mounted on a support comprising corresponding ,flanges which extend laterally from the main components, and that a top side of the flanges on the parts on which the main components are mounted are intended for abutting an underside of the flanges of the side members.

6. A windmill nacelle according to any of claims 2 - 5, **characterized in that** the nacelle is furnished with at least an upper horizontal or approximately horizontal beam (28) and at least one lower horizontal or approximately horizontal beam (27), which are mutually connected with means for absorbing shearing forces, for example a lattice work (29), where the upper beam constitutes a track for a trolley (30) supporting the winch (31) or the tackle.

7. A windmill nacelle according to any of claims 2 - 6, **characterised in that** the nacelle is provided with a number of tackles at its top side, and that the main components are intended to be hoisted from below and up into the nacelle by ropes, wires (32) or the like being passed through the tackles and fastened to the main components and to a winch (31) mounted at the top side or the underside of the nacelle.

## Patentansprüche

1. Verfahren zum Anbringen von Hauptkomponenten in oder an einer Windkraftanlage,
wobei zunächst ein Windkraftanlagenturm errichtet wird,
wobei anschließend eine Gondel auf einer Stützfläche (13) oben auf dem Windkraftanlagenturm angebracht wird,
und wobei schließlich die Hauptkomponenten Generator (11, 25), Getriebe (7, 23) und Rotorblätter (3) in oder an der Gondel angebracht werden,
wobei die Gondel mit Seitenelementen (27) zum Befestigen dieser Hauptkomponenten an der Gondel versehen ist,
und mit einer Öffnung, durch welche diese Hauptkomponenten in die oder an der Gondel eingeführt werden,
und wobei diese Hauptkomponenten von unten von einer Unterseite der Gondel her und aufwärts in oder an der Gondel mittels einer Winde (31) oder eines Flaschenzugs angebracht werden, die bzw. der an der Oberseite der Gondel angeordnet ist,
und wobei diese Winde (31) oder dieser Flaschenzug in der Gondel verlagert wird,
**dadurch gekennzeichnet, dass** die Seitenelemente (27) mit Kontaktflächen an ihrer Unterseite versehen sind, die ein Widerlager für entsprechende Verbindungsmittel an den Hauptkomponenten zum Halten der Hauptkomponenten an den Seitenelementen (27) bilden,
wobei die Hauptkomponenten an der Unterseite der Seitenelemente (27) am Boden der Gondel befestigt werden.

2. Windkraftanlagengondel zum Anbringen der Hauptkomponenten Generator (11, 25), Getriebe (7, 23) und Rotorblätter (3), wobei die Gondel mit Seitenelementen (27) zum Befestigen dieser Hauptkomponenten an der Gondel versehen ist,
und mit einer Öffnung, durch welche diese Hauptkomponenten in die oder an der Gondel eingeführt werden,
und wobei die Gondel mit einer Hubeinrichtung in Form einer Winde (31) oder eines Flaschenzugs versehen ist, die bzw. der in der Gondel verlagert wird,
**dadurch gekennzeichnet, dass** die Seitenelemente (27) mit Kontaktflächen an ihrer Unterseite versehen sind, die ein Widerlager für entsprechende Verbindungsmittel an den Hauptkomponenten zum Halten der Hauptkomponenten an den Seitenelementen (27) bilden, wobei die Hauptkomponenten an der Unterseite der Seitenelemente (27) am Boden der Gondel befestigt werden.

3. Windkraftanlagengondel nach Anspruch 2, **dadurch gekennzeichnet, dass**
die Kontaktflächen Verbindungsmittel umfassen.

4. Windkraftanlagengondel nach Anspruch 3, **dadurch gekennzeichnet, dass**
die Verbindungsmittel der Seitenelemente (27) Flansche umfassen, die sich seitlich erstrecken, dass
die Verbindungsmittel der Hauptkomponenten entsprechende Flansche sind, die sich von den Hauptkomponenten aus seitlich erstrecken, und dass
eine Oberseite der Flansche an den Hauptkomponenten dazu bestimmt ist, an einer Unterseite der Flansche der Seitenelemente zur Anlage zu kommen.

5. Windkraftanlagengondel nach Anspruch 3, **dadurch gekennzeichnet, dass**
die Verbindungsmittel der Seitenelemente (27) Flansche umfassen, die sich seitlich erstrecken, dass
die Hauptkomponenten auf einem Träger angebracht sind, der entsprechende Flansche umfasst, welche sich von den Hauptkomponenten aus seitlich erstrecken, und dass eine Oberseite der Flansche an den Teilen, auf welchen die Hauptkomponenten angebracht sind, dazu bestimmt ist, an einer Unterseite der Flansche der Seitenelemente zur Anlage zu kommen.

6. Windkraftanlagengondel nach einem der Ansprüche 2 - 5, **dadurch gekennzeichnet, dass**
die Gondel mit mindestens einem oberen horizontalen oder annähernd horizontalen Balken (28) und mindestens einem unteren horizontalen oder annähernd horizontalen Balken (27) versehen ist, welche mit Mitteln zum Aufnehmen von Scherkräften miteinander verbunden sind, zum Beispiel einer Gitterkonstruktion (29), wobei der obere Balken eine Führung für eine Laufkatze (30) bildet, welche die Winde (31) oder den Flaschenzug trägt.

7. Windkraftanlagengondel nach einem der Ansprüche 2 - 6, **dadurch gekennzeichnet, dass**
die Gondel mit einer Anzahl von Flaschenzügen an ihrer Oberseite versehen ist, und dass die Hauptkomponenten dazu bestimmt sind, von unten und nach oben in die Gondel durch Seile, Drähte (32) oder Ähnliches hochgezogen zu werden, die durch die Flaschenzüge hindurchgeführt werden und an den Hauptkomponenten und an einer Winde (31), die an der Oberseite oder der Unterseite der Gondel angebracht ist, befestigt werden.

## Revendications

1. Procédé d'assemblage des composants principaux dans ou sur une éolienne,
dans lequel une tour d'éolienne est tout d'abord élevée,
dans lequel une nacelle est ensuite montée sur une surface d'appui (13) au sommet de la tour d'éolienne,
et dans lequel enfin les composants principaux, générateur (11, 25), boîte d'engrenages (7, 23) et ailes (3) sont montés dans ou sur la nacelle,
ladite nacelle étant pourvue d'éléments latéraux (27) pour fixer lesdits composants principaux à ladite nacelle
et d'une ouverture à travers laquelle lesdits composants principaux sont introduits dans ou sur la nacelle,
et lesdits composants principaux étant montés d'en bas à partir d'un côté inférieur de ladite nacelle et vers le haut dans ou sur la nacelle au moyen d'un treuil (31) ou d'un palan fixé sur le côté supérieur de ladite nacelle,
et ledit treuil (31) ou palan étant déplacé dans ladite nacelle, **caractérisé en ce que** les éléments latéraux (27) sont munis de surfaces de contact au niveau de leur côté inférieur formant une butée pour des moyens de connexion correspondants sur lesdits composants principaux pour retenir lesdits composants principaux au niveau desdits éléments latéraux (27),
lesdits composants principaux étant fixés du côté inférieur desdits éléments latéraux (27) au bas de la nacelle.

2. Nacelle d'éolienne pour monter les principaux composants générateur (11, 25), boîte d'engrenages (7, 23) et ailes (3),
ladite nacelle étant pourvue d'éléments latéraux (27) pour fixer lesdits composants principaux à ladite nacelle
et d'une ouverture à travers laquelle lesdits composants principaux sont introduits dans ou sur ladite nacelle,
ladite nacelle étant pourvue d'un appareil de levage sous la forme d'un treuil (31) ou d'un palan qui est déplacé dans ladite nacelle,
**caractérisé en ce que** les éléments latéraux (27) sont munis de surfaces de contact au niveau de leur côté inférieur formant une butée pour des moyens de connexion correspondants sur lesdits composants principaux pour retenir lesdits composants principaux au niveau desdits éléments latéraux (27),
lesdits composants principaux étant fixés au côté inférieur desdits éléments latéraux (27) au bas de la nacelle.

3. Nacelle d'éolienne selon la revendication 2, **caractérisée en ce que** lesdites surfaces de contact comprennent des moyens de connexion.

4. Nacelle d'éolienne selon la revendication 3, **caractérisée en ce que**
les moyens de connexion des éléments latéraux (27) comprennent des brides s'étendant latéralement,
**en ce que** les moyens de connexion des composants principaux sont des brides correspondantes s'étendant latéralement à partir des composants principaux, et
**en ce qu'**une face supérieure des brides sur les composants principaux est conçue pour être attenante au côté inférieur des brides des éléments latéraux.

5. Nacelle d'éolienne selon la revendication 3, **caractérisée en ce que** les moyens de connexion des éléments latéraux (27) comprennent des brides s'étendant latéralement,
**en ce que** les composants principaux sont montés sur un support comprenant des brides correspondantes qui s'étendent latéralement à partir des composants principaux, et
**en ce qu'**une face supérieure des brides sur les parties sur lesquelles les composants principaux sont montés est conçue pour être attenante à un côté inférieur des brides des éléments latéraux.

6. Nacelle d'éolienne selon l'une quelconque des revendications 2 à 5, **caractérisée en ce que** la nacelle est munie d'au moins une poutre supérieure horizontale ou approximativement horizontale (28) et d'au moins une poutre inférieure horizontale ou approximativement horizontale (27), qui sont mutuellement connectées avec des moyens pour absorber les forces de cisaillement, par exemple un treillis (29), où la poutre supérieure constitue un rail pour un chariot (30) supportant le treuil (31) ou le palan.

7. Nacelle d'éolienne selon l'une quelconque des revendications 2 à 6, **caractérisée en ce que** la nacelle est munie de plusieurs palans sur sa face supérieure, et **en ce que** les composants principaux sont conçus pour être hissés de bas en haut dans la nacelle par des cordes, des câbles (32) ou des moyens similaires passés à travers les palans et fixés aux composants principaux et à un treuil (31) monté au niveau de la face supérieure ou du côté inférieur de la nacelle.
